# EUROPEAN PATENT SPECIFICATION

(11) **EP 3 033 520 B1**
(45) Date of publication and mention of the grant of the patent: **30.05.2018**
(21) Application number: 14792586.1
(22) Date of filing: 10.08.2014
(51) Int. Cl.: F02D 41/30, F02D 13/02

(54) **IMPROVEMENTS TO PLANETARY GEARS RECIPROCATING PISTON MACHINES**
VERBESSERUNGEN AN HUBKOLBENMASCHINEN MIT PLANETENGETRIEBEN
AMÉLIORATIONS APPORTÉES À DES MACHINES À PISTON ALTERNATIF ET ENGRENAGE PLANÉTAIRE

(30) Priority: 16.08.2013 IE 20130244
(43) Date of publication of application: 22.06.2016
(73) Proprietor: Ogunmuyiwa, Adedapo, 56290 Dommershausen-Dorweiler (DE)
(72) Inventor: Ogunmuyiwa, Adedapo, 56290 Dommershausen-Dorweiler (DE)
(86) International application number: PCT/IB2014/063831
(87) International publication number: WO 2015/022614

(56) References cited:
- DE-A1-102004 016 386
- US-A- 3 974 815
- US-A- 4 377 996

## Description

### Technical Field

The field of this invention is an internal combustion engine cycle.

### Background Art

Planetary Gears Reciprocating Piston Machines with one or more rotating cylinders in order to obtain the reciprocating-piston motion, the cylinder axes thereof arranged substantially tangentially to a circle centred on main shaft axis (Reference Publication No.: WO9502114 of 19th January, 1995) are well known for their capability of overcoming the 'Dead Points' associated with reciprocating mechanisms.

This invention describes improvements to these machines to enable them to function as internal combustion engines, by defining an engine cycle which yields performance improvements on the state of the art internal combustion engine technology.

With reference to DE 26 10 869 A1 (VERBRENNUNGSMOTOR MIT MEHREREN IN EINEM ROTATIONSKOERPER ANGEORDNETEN ZYLINDERN, Rohde), it is indicated that the ignition system is housed at the end of the compression zone, so it would not be possible for the peak pressure of combustion to be achieved during compression stroke.

With reference to US 4 741 300 (ROTATING CYLINDER INTERNAL COMBUSTION ENGINE, Benson), column 11 line 52 indicates that the firing takes place when the piston is in the south position of the cylinder in Figure 7 which corresponds to the top-dead-centre position. As this would be at the end of the compression stroke, it would not be possible for the peak pressure of combustion to be achieved during compression stroke.

With reference to US 4 077 365, (EXPANSIBLE CHAMBER APPARATUS, Schlueter), in column 4, lines 53 - 54, it is stated that the engine operates on the Otto Cycle, so the peak pressure would be achieved either at the top-dead-centre position or on the expansion stroke, but not during the compression stroke.

### Disclosure of Invention

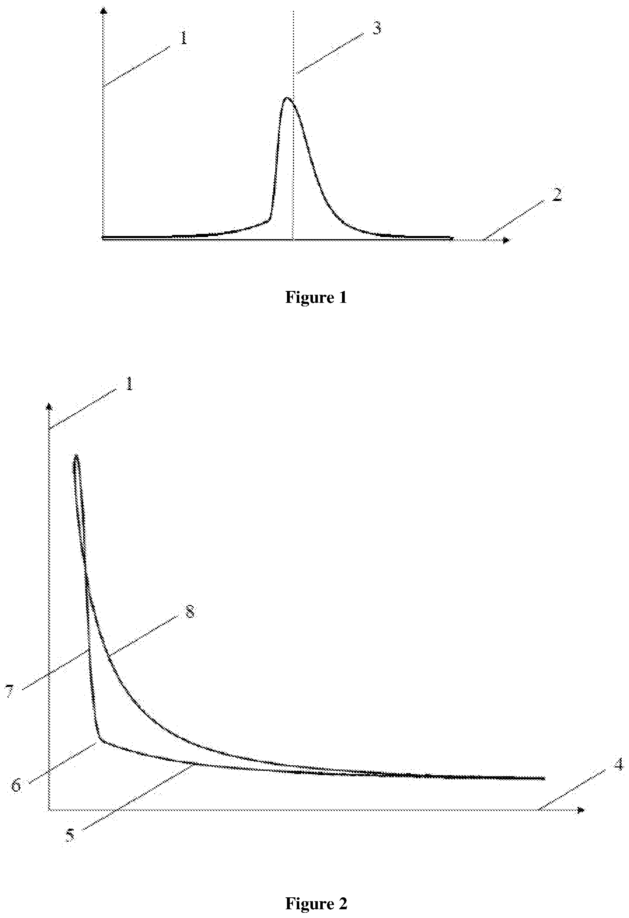

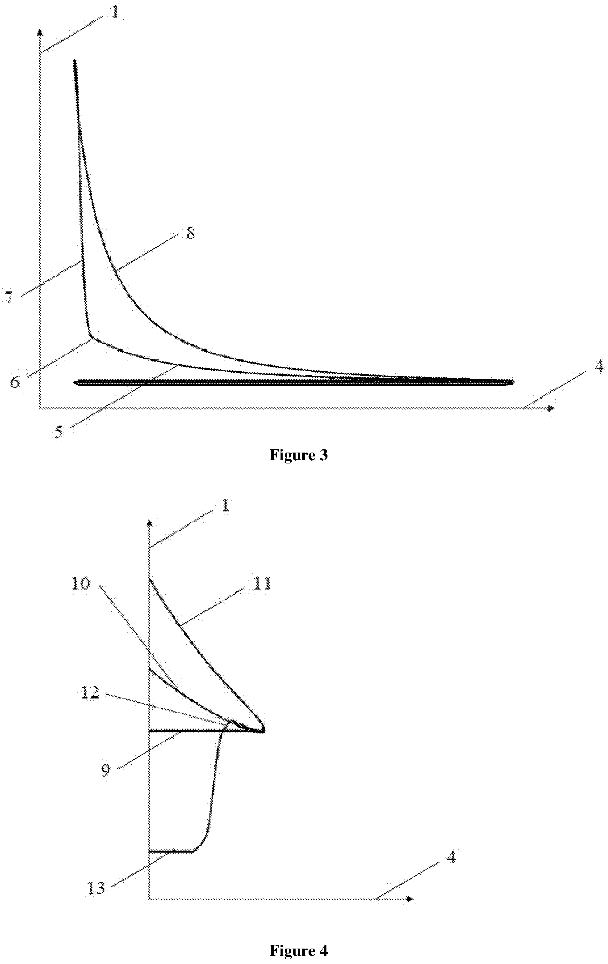

This invention relates to an engine cycle which can be applied to Planetary Gears Reciprocating Pistons Machines with one or more rotating cylinders in order to obtain the reciprocating-piston motion, the cylinder axes thereof arranged substantially tangentially to a circle centred on main shaft axis designed to operate as internal combustion engines, providing improvements to such machines and to internal combustion engines in the following manner:
An internal combustion engine cycle suitable for operation as a two-stroke engine cycle as shown in Figure 2, a four-stroke engine cycle as shown in Figure 3 or a higher number stroke engine cycle, when applied to Planetary Gears Reciprocating Pistons Machines with one or more rotating cylinders in order to obtain the reciprocating piston motion, the cylinder axes thereof arranged substantially tangentially to a circle centred on main shaft axis, whereby the combustion of the working fluid (7) (working fluid being air, fuel or an air/fuel mixture), whether initiated by compression or spark ignition, occurs during the compression stroke (5) of the cycle, thus enabling power to be transmitted on the compression stroke (5) as well as on the expansion stroke (8) so as to improve the opportunities for achieving a more complete combustion and to increase the thermal efficiency of the engine. This ignition process causes a significant increase of pressure on the compression stroke, illustrated by a discontinuity in the graph of the pressure (1) versus volume (4) at the point of ignition (6) when compared to the pressure-volume relationship which existed previously on the compression stroke (5) as shown in Figure 2 and Figure 3. While the combustion occurs during the compression stroke, the pressure (1) versus crank angular position (2) relationship is such that the peak pressure of the combustion cycle can occur on the compression stroke before the top-dead-centre crank position (3) as shown in Figure 1.

### Brief Description Of Drawings

The invention will be more clearly understood from the following description of an embodiment thereof, given by way of an example only, with reference to the accompanyingdrawings, in which:
Figure 1 shows a graph of the pressure versus crank angular position relationship for combustion occurring on the compression stroke relative to the top-dead-centre crank position;
Figures 2 shows a graph of the pressure versus volume relationship of a two-stroke engine cycle;
Figures 3 shows a graph of the pressure versus volume relationship of a four-stroke engine cycle;
Figure 4 shows a graph of the pressure versus volume relationship for the recompression of the working fluid at the end of the expansion stroke of a four-stroke engine cycle.

### Best Mode for Carrying out the Invention

During the period of combustion of the working fluid on the compression stroke, the burnt gases are successively compressed, causing a temperature increase, which supports the subsequent combustion of the unburnt gases, thereby improving the opportunities for achieving a more complete combustion. During the combustion of current engine cycles on the expansion stroke, the expansion process causes a cooling down of the burnt gases, which impedes the ignition of the unburnt gases, leading to incomplete combustion.

The addition of heat to the working fluid due to the combustion which occurs on the compression stroke causes additional positive work to be performed by the engine during the compression stroke in addition to that of the expansion stroke, thus enabling a higher thermal efficiency to be achieved.

The opening of the ports at the end of the expansion stroke (11) and at the beginning of the exhaust stroke (13) or the scavenging period can be delayed after the bottom-dead-centre crank position in order to extend the duration of the power stroke and thus increase the work done by the engine by enabling the expanded working fluid to be recompressed before the exhaust or scavenging starts. This is illustrated in the graph of the pressure (1) versus volume (4) of a 4 stroke cycle in shown in Figure 4. In this example, the recompression of the working fluid (12) retraces the graph of the beginning of the compression stroke (10) after the end of the intake stroke (9).

### Industrial Applicability

This invention provides an improvement to the state of the art because current engine cycles cannot support combustion on the compression stroke without incurring major damage to the engine and therefore require the combustion to be delayed so that it is carried out at the top-dead-centre crank position or after the top-dead-centre crank position on the expansion stroke. Although current engines cycles do permit the combustion to begin on the compression stroke, they have to control it so that the main combustion event takes place after the top-dead-centre crank position to avoid such engine damage.

Conversely, in the application of this invention under such conditions where the peak pressure may occur at or after the top-dead-centre crank position, such performance is not deliberately timed to occur in this way (as is the preferred practice with current internal combustion engines), but is the result of the delay in the combustion process under the prevailing conditions which cause the peak pressures to be achieved at this point. As opposed to current internal combustion engines the aim of this cycle is to complete the combustion process as soon as possible, without trying to time the completion to occur at or after the top-dead-centre crank position.

## Claims

1. An internal combustion engine cycle suitable for operation as a two-stroke engine cycle, a four-stroke engine cycle or a higher number stroke engine cycle, when applied to Planetary Gears Reciprocating Pistons Machines with one or more rotating cylinders in order to obtain the reciprocating-piston motion, the cylinder axes thereof arranged substantially tangentially to a circle centred on main shaft axis,
- whereby the combustion of the working fluid, occurs during the compression stroke of the cycle and the peak pressure of the combustion cycle is timed to occur on the compression stroke before the top-dead-centre crank position and,
- whereby opening of exhaust ports at the end of the expansion stroke and at the beginning of the exhaust stroke or the scavenging period is delayed after the bottom-dead-centre crank position thus enabling the expanded working fluid to be recompressed before the exhaust or scavenging starts.

## Patentansprüche

1. Ein Zyklus eines Verbrennungsmotors, und zwar entweder ein Zweitaktmotorzyklus, ein Viertaktmotorzyklus oder ein Motorzyklus mit einer höheren Anzahl an Takten für Hubkolbenmotoren mit Planetengetriebe und einem oder mehreren rotierenden Zylindern zur Durchführung einer Hubkolbenbewegung, bei der die Zylinderachsen im Wesentlichen tangential zu einem an der Hauptwellenachse zentrierten Kreis verlaufen,
- wobei die Verbrennung des Arbeitsmediums während des Verdichtungshubs des Zyklusstattfindet und der Spitzendruck des Verbrennungszyklus während des Verdichtungshubs vor dem oberen Totpunkt der Kurbelwelle erreicht wird, und
- wobei das Öffnen der Auslassöffnungen am Ende des Ausdehnungshubs uns am Anfang des Auslass- bzw, Spülhubs nach dem unteren Totpunkt der Kurbelwelle verzögert wird, wodurch das sich ausdehnende Arbeitsmedium erneut verdichtet wird, bevor der Auslass- oder Spülhub beginnt.

## Revendications

1. Cycle d'un moteur à combustion interne pouvant fonctionner comme le cycle d'un moteur à deux temps, à quatre temps ou à plus de temps, lorsqu'il est appliqué aux machines à pistons alternatifs et engrenages planétaires avec un ou plusieurs cylindres rotatifs afin d'obtenir le mouvement du piston alternatif. Ses axes de cylindres sont alors disposés pratiquement de manière tangentielle à un cercle centré sur l'axe de l'arbre principal,
- ainsi la combustion du fluide de travail se produit pendant la phase de compression du cycle et le pic de pression du cycle de combustion est programmé pour se produire pendant la phase de compression avant que le vilebrequin ne soit en position point mort haut (PMH) et,
- l'ouverture des orifices d'échappement à la fin de la phase d'explosion et au début de la phase d'échappement ou du processus de balayage est retardée après la position du vilebrequin au point mort bas (PMB) permettant ainsi de recomprimer le fluide de travail dilaté avant que la phase d'échappement ou de balayage ne se déclenche.
